Europäisches Patentamt

European Patent Office

Office européen des brevets

(19)

(11) Publication number: **0 159 723**
A2

# (12) EUROPEAN PATENT APPLICATION

(21) Application number: **85105151.6**

(22) Date of filing: **26.04.85**

(51) Int. Cl.⁴: **B 23 K 26/02**

(30) Priority: **27.04.84 JP 83783/84**

(43) Date of publication of application: **30.10.85**
Bulletin 85/44

(84) Designated Contracting States: **DE FR GB**

(71) Applicant: **HITACHI, LTD., 6, Kanda Surugadai 4-chome Chiyoda-ku, Tokyo 100 (JP)**

(72) Inventor: **Okazaki, Akiyasu, Yuzan-ryo 4-1-1, Suwacho, Hitachi-shi (JP)**
Inventor: **Hashiura, Masayoshi, 4-9-13, Suwacho, Hitachi-shi (JP)**
Inventor: **Ichikawa, Michio, 3-14-8, Daiharacho, Hitachi-shi (JP)**

(74) Representative: **Strehl, Schübel-Hopf, Schulz, Widenmayerstrasse 17 Postfach 22 03 45, D-8000 München 22 (DE)**

(54) **Laser beam machining apparatus.**

(57) An output laser beam (1A) from a laser device (2) of a laser beam machine (1) converges by itself at a position along its travel to provide a beam waist (1B) where the beam spot size is minimized and power density is high. A cutter head (6) is arranged at the beam waist to cut an object (15) with a narrow cutting width.

HITACHI, LTD.
EPA-27142                                        April 26, 1985

## LASER BEAM MACHINING APPARATUS

BACKGROUND OF THE INVENTION

This invention relates to a laser beam machining apparatus (hereinafter simply referred to as a laser beam machine) and more particularly to an improvement in arranging a cutter head of the laser beam machine.

In a gas laser system, glow discharge is effected in an excitation chamber containing a mixture gas of, for example, He, $N_2$ or $CO_2$ to excite the mixture gas, thereby generating a laser beam. The laser beam is resonated between a plurality of mirrors disposed within the excitation chamber and delivered out of the excitation chamber through an output mirror. The outputted laser beam is used for cutting an iron plate, ceramics and the like. In machining particularly of cutting an object, the cutting width is desired to be narrow for precise working extensively applicable to a variety of objects. To meet this requirement, a laser beam having a characteristic generally called a single mode characteristic is used. The laser beam pursuant to the single mode characteristic has an energy density distribution which has an eminent peak on the center axis of the laser beam and steeply decreases toward a periphery thereof. To obtain the single mode characteristic, the resonance length of the laser beam must be increased. To this end, return mirrors are provided at the opposite ends of the excitation spacing so that the laser beam may be reflected a number of times between the return mirrors, or positioning of a plurality of mirrors is adjusted so that these mirrors are centered to the optical axis of the laser beam. The above measure, however, is inherently limited in obtaining a laser beam of high power density.


SUMMARY OF THE INVENTION

An object of this invention is to provide a laser beam machine capable of producing a laser beam of high power density.

The inventors of this application have studied the behavior of an output laser beam from the laser system to find that the output laser beam converges by itself at a certain position along its path to provide a beam waist where the beam spot size is minimized and power density is high. This invention is based on the findings.

According to this invention, a cutter head of the laser beam machine is arranged at the beam waist to cut an object with a narrow cutting width.


BRIEF DESCRIPTION OF THE DRAWINGS

Fig. 1 is a schematic perspective view of a multi-purpose laser beam machine according to an embodiment of the invention;

Fig. 2 schematically shows a working head of the Fig. 1 apparatus;

Figs. 3 and 4 show characteristics of output laser beams; and

Fig. 5 is a schematic perspective view of a multi-purpose laser working apparatus according to another embodiment of the invention.

DESCRIPTION OF THE PREFERRED EMBODIMENTS

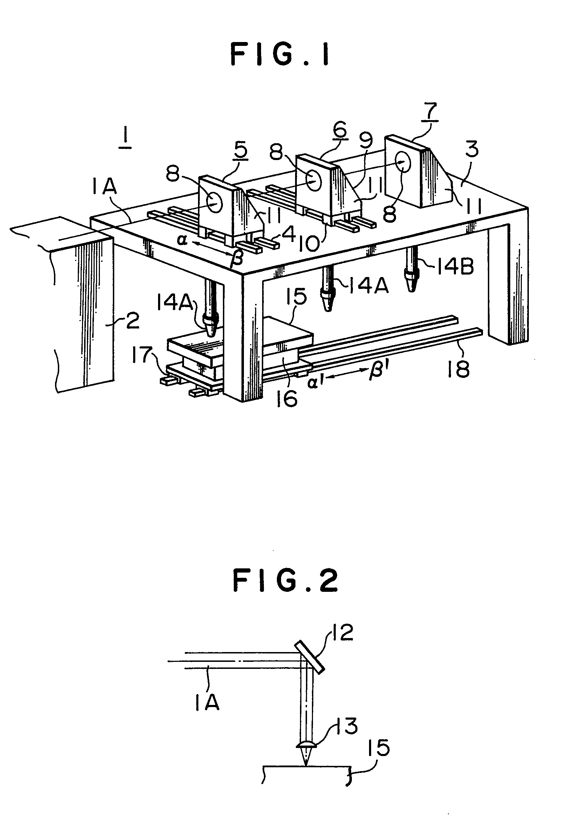

Referring now to Fig. 1, a multi-purpose laser beam machine 1 according to an embodiment of the invention generally comprises a laser device 2 and a working table 3 which opposes the output side of the laser device through a spacing. Disposed on a table top of the working table 3 are two sets of rails 4. The rails 4 are orthogonal to an output laser beam 1A from the laser device 2. A welder head 5 is slidably carried on one set of rails and a cutter head 6 is slidably carried on the other set of rails. A heat-treating head 7 is stationarily fixed to the table top. Each of the working heads 5, 6 and 7 has an opening 8 opposing an output port of the laser device and an inclined surface wall 9 opposite to the opening 8, thus forming a box casing 11. Each of the welder and cutter heads 5 and 6 has at the bottom of its box casing guides 10 which mate the set of rails. The inclined surface wall 9 is mounted with an bend mirror 12 as shown in Fig. 2. The laser beam 1A from the laser device 2 is reflected by the bend mirror 12 to be directed to a focusing lens 13. A pipe 14A or 14B interconnects the focusing lens 13 and the box casing 10, and the focusing lens 13 is supported by the pipe 14A or 14B. The pipe 14A is secured to the box casing so as to be

moved in directions α and β as the welder head 5 or the cutter head 6 slides on the rails 4. The laser beam 1A from the cutter head 6 transmitted through the focusing lens 13 irradiates on an object 15 to be worked, for example an iron plate, for cutting the same. A carriage table 16 carrying on its table top the object 15 has, on its bottom, guides 17 which mate a set of rails 18 extending in the same direction as that of the propagation of the laser beam 1A. The carriage table 16 is therefore movable in directions α' and β'.

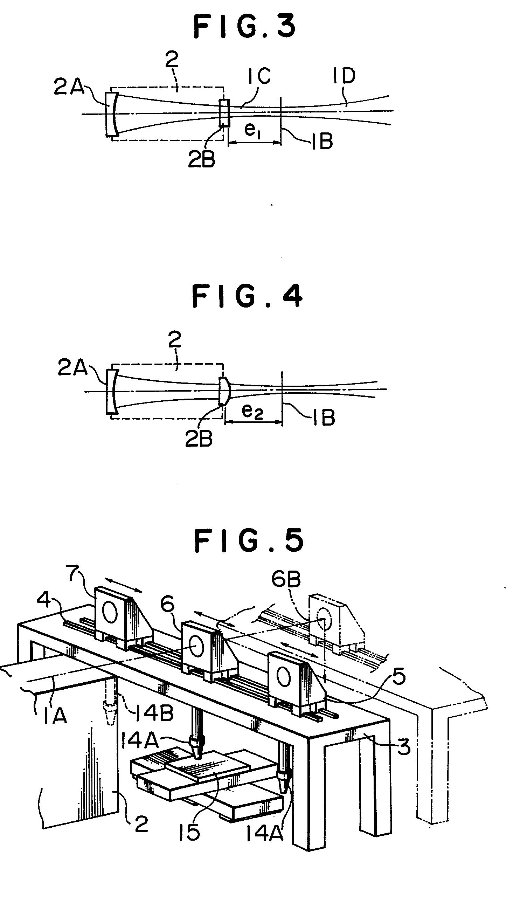

With this construction, a laser beam generated in the laser device 2 is resonated between a total reflection mirror 2A and an output mirror 2B of the laser device 2 (see Fig. 3) and delivered out of the output mirror 2B to provide the output laser beam 1A. When measuring a beam spot of the laser beam 1A by an acryl burn pattern or by using a focusing-type instrument, an optical characteristic as shown in Fig. 3 or 4 can be obtained, indicating that the laser beam 1A converges by itself to provide a beam waist 1B where the beam spot size is minimized and the power density is maximized. Thus, according to the present invention, the cutter head 6 is located at the beam waist so that the object 15 may be cut with a minimal cutting width. Accordingly, the object can be cut within a wide range covering rough cutting and precise cutting.

To improve reduction in beam spot size, a convex lens may be combined with the output mirror 2B as shown in Fig. 4. This is particularly effective for cutting working. In addition, the beam size reduction spreads into the entire effective laser beam and even in applications of welding and heat-treating, a small beam spot allows to reduce sizes of lens, mirror and holder involved.

If the arrangement of the welder, cutter and heat-treating heads is such that, as shown in Fig. 1, the cutter head 6 is disposed between the welder head 5 and the heat-treating head 7,and an elongated steel plate is desired to be cut along its center line to halve the elongated steel plate, the center line of this steel plate secured to the carriage table 16 is located immediately beneath the cutter head 6. Under this condition, the lengths of the steel plate halves equidistantly extend from the center line in register with the cutter head 6 toward the welder head 5 and heat-treating head 7, so that the room required for setting of the steel plate can be saved and the amount of movement of the cutter head 6 or the steel plate can be reduced to thereby improve working efficiency. When, under this condition, the steel plate halves are also desired to be subjected to subsequent welding or heat-treating, the amount of movement of the half from the cutter head 6 to the welder head 5 or the heat-treating head 7 can also be reduced to thereby improve working efficiency.

In addition, when an operator stands on the rear of the heat-treating head 7 stationarily fixed to the working table 3, the operator can be safeguarded against irradiation of the laser beam 1A since the laser beam can totally be reflected at the heat-treating head 7. In case the heat-treating head 7 is movable as the cutter head 6, the laser beam 1A could irradiate on the operator in the event that the heat-treating head is inadvertently moved during irradiation of the laser beam 1A. Such an inadvertency tends to occur during maintenance and inspection of the apparatus. The stationary heat-treating head of this embodiment can perfectly avoid the inadvertent troubles and insure safety of the operator.

Referring to Fig. 5, there is illustrated a laser working apparatus according to another embodiment of the invention, which is effective to reduce the occupation area of the various heads in the direction of beam propagation as compared to the Fig. 1 embodiment. More particularly, a welder head 5, a cutter head 6 and a heat-treating head 7 are arranged in line on a working table 3 in a direction orthogonal to the irradiation direction of the laser beam 1A. In this embodiment, an additional cutter head 6B may be provided on the rear of the cutter head 6 as shown at chained line in Fig. 5.

As described above, according to the invention, the cutter head is arranged at the beam waist to cut the object with a minimal cutting width and a high power density.

- 7 -

CLAIMS:

1. A laser beam machining apparatus (1) for machining an object,
c h a r a c t e r i z e d   by:

a laser device (2) generating a laser beam (1A);

at least one bend mirror (12) reflecting said laser beam in the direction of said object (15);

a supporting means (3) for supporting and positioning said bend mirror; and

at least one machining head (14A) disposed between said bend mirror and said object and radiating said laser beam onto said object for machining said object, said machining head being positioned at a waist point (1B) of said laser beam.

2. A laser beam machining apparatus according to claim 1 wherein three bend mirrors are disposed one after another on said supporting means (3) along said laser beam (1A), said three bend mirrors being parts of a welder head (5), a cutter head (6) and a heat-treating head (7), and said welder head and said cutter head are movable in a direction (α, β) orthogonal to said laser beam (1A).

3. A laser beam machining apparatus according to claim 2, wherein said heat-treating head (7) is fixed on said supporting means (3).

4. A laser beam machining apparatus according to claim 1, wherein three bend mirrors are arranged one by one on said supporting means (3) in a direction orthogonal to said laser beam, said three bend mirrors being parts of a welder head (5), a cutter head (6) and a heat-treating head (7), and each head is movable in a direction orthogonal to said laser beam.

5. A laser beam machining apparatus according to claim 4, wherein said three bend mirrors are arranged in order of said welder head (5), said cutter head (6) and said heat-treating head (7).

Ah/bi

# FIG. 1

# FIG. 2

# FIG.3

# FIG.4

# FIG.5